# EUROPÄISCHE PATENTSCHRIFT

(11) **EP 0 742 254 B1**
(45) Veröffentlichungstag und Bekanntmachung des Hinweises auf die Patenterteilung: **03.09.2003**
(21) Anmeldenummer: 96106792.3
(22) Anmeldetag: 30.04.1996
(51) Int. Cl.: C08K 5/00

(54) **Kunststoff mit verminderter Geschwindigkeit der Schwefelaufnahme**
Resin having reduced rate of sulfur acceptance
Résine à vitesse de fixation de soufre réduit

(30) Priorität: 10.05.1995 DE 19516701
(43) Veröffentlichungstag der Anmeldung: 13.11.1996
(73) Patentinhaber: Clariant GmbH, 65929 Frankfurt am Main (DE)
(72) Erfinder: Zäh, Matthias, Dr., 86368 Gersthofen (DE); Pfahler, Gerhard, Dr., 86169 Augsburg (DE); Gaa, Karl, Dr., 89349 Burtenbach (DE); Keck-Antoine, Klaus, Dl., Charlotte, NC 28226 (US)

(56) Entgegenhaltungen:
- EP-A- 0 345 220
- EP-A- 0 357 223
- EP-A- 0 389 431
- EP-A- 0 429 731
- EP-A- 0 505 203
- US-A- 4 232 131
- US-A- 4 468 488
- US-A- 4 863 981
- US-A- 5 112 890
- US-A- 5 169 925
- US-A- 5 246 991

## Beschreibung

Der Anteil der im Freiland, z.B. in der Landwirtschaft oder im Gartenbau, eingesetzten Kunststoffe steigt seit Jahren kontinuierlich an. Es handelt sich dabei z.B. um Folien für Gewächshäuser, Folien für Silage, Folien oder Vliese, die ausgelegt werden zur Ernteverfrühung und vieles mehr. Als Materialien für derartige Artikel können alle Polymere zum Einsatz kommen, die den entsprechenden Anforderungen standhalten. Für diese Anwendungen besonders geeignet sind Polyolefine. Polyvinylchlorid (PVC) eignet sich speziell für Folien, wird aber immer mehr von Polyethylen (PE) Homo- und Copolymeren, z.B. mit EVA, verdrängt. PE-Folien und PP-Fasern, verarbeitet zu Vliesen, werden in der Landwirtschaft oft zur Abdeckung von Kulturen verwendet, um eine Ernteverfrühung zu erreichen.

Polyolefine auf Basis PE- oder PP-Homo- oder Copolymer müssen beim Einsatz im Freien durch den Zusatz von Additiven stabilisiert werden, was lange Zeit durch den Einsatz von Nickel-Quenchern und UV-Absorbern erfolgte. Seit Anfang der 80er Jahre wurden Nickel-Quencher immer mehr durch hochmolekulare sterisch gehinderte Amine (HALS) ersetzt, weil mit HALS ausgerüstete Landwirtschaftsoder Gewächshausfolien eine höhere Stabilität gegen Licht und Wärme aufweisen. Die Stabilisierung von Kunststoffen mit sterisch gehinderten Aminen wird beschrieben in EP 28 318 und EP 402 889. Als Stand der Technik ist die Stabilisierung von Kunststoffen mit dem sterisch gehinderten Amin der Formel IV anzusehen (F.Henninger, E. Pedrazetti, Plasticulture, 80, 1988/4, 5-23).

Die Lebensdauer einer Folie (Handbook of Polymer Degradation, Ed. 1, Marcel Dekker Inc., New York, 1992, Kapitel 14: Aspects of Greenhouse Film Stabilization) hängt zum einen ab von der Folie selbst (Material, Stabilisierung, Dicke, Pigment, Füllstoffe), zum anderen von äußeren Einflüssen wie der Gewächshauskonstruktion, dem Klima, sowie dem Kontakt mit Chemikalien, insbesondere Agrarchemikalien (F.J. Barahona, J.M.G. Vasquez, Plasticulture, 65 (1985), 3-10). Chemikalien können deutlich zum beschleunigten Abbau derartiger Folien beitragen, wobei es sich bei diesen Chemikalien meist um schwefel- oder halogenhaltige Verbindungen handelt. Ein besonders negativer Effekt geht aus von schwefelhaltigen Verbindungen wie z.B. Natrium-N-methyldithiocarbamat. Dabei besteht ein direkter Zusammenhang zwischen der in der Folie wiedergefundenen Schwefelmenge und der verbleibenden Qualität der Folie: je höher der Schwefelgehalt ist, desto schlechter ist die verbleibende Qualität der Folie. Zerstörte Folien zeichnen sich durch einen extrem hohen Schwefelgehalt aus.

Weitere Schwefelquellen, die sich auf den Schwefelgehalt des Kunststoffs auswirken, sind Schwefelwasserstoff, z.B. aus Agrarchemikalien oder Fäulnisgasen, oder Schwefeldioxid, welches beim Abbrennen von elementarem Schwefel entsteht, oder aus der Luft (saurer Regen) stammen kann. Betroffen von der Einwirkung von Schwefeldioxid sind nicht nur Kunststoffe speziell im landwirtschaftlichen Bereich, sondern ganz allgemein Artikel aus Kunststoff (Folien, Platten, Extrusionsartikel, Fasern) sowie daraus hergestellte Artikel wie Bändchen, Vliese, Gewebe.

Ziel der Erfindung war nun eine Möglichkeit zu finden, die Empfindlichkeit von Kunststoffen gegenüber schwefelhaltigen Einflüssen (wie z.B. Agrochemikalien, Schwefelwasserstoff, Schwefeldioxid) herabzusetzen. Es konnte nun überraschend gefunden werden, daß ein Kunststoff, der spezielle HALS-Verbindungen enthält, eine verminderte Geschwindigkeit zur Aufnahme von schwefelhaltigen Verbindungen zeigt.

Gegenstand der Erfindung ist also die Verwendung mindestens in einen kunststoff inkorporienten hochmolekularen, sterisch gehinderten Aminsaus der Gruppe bestehend aus
I: Oligomerisiertes 2,2,4,4-Tetramethyl-20-(oxiranylmethyl)-7-oxa-3,20-diazadispiro[5.1.11.2]heneicosan-21-on,
II: Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan oder
III: Kondensationsprodukt aus 1-Hydroxyethyl-2,2,6,6-tetramethyl-4-hydroxypiperidin und Bernsteinsäure,
   zur Verringerung der Aufnahme schswefelhaltigen Verbindungen in den kunststoff.
   Besonders geeignet ist die Verwendung, in der mindestens ein sterisch gehindertes Amin der Formel I, der Formel II oder der Formel III sowie mindestens ein Amin ausgewählt aus der Gruppe bestehend aus
IV: Kondensationsprodukt aus N,N'-Bis-(2,2,6,6-Tetramethyl-4-piperidyl)-hexamethylendiamin und 4-tert-Octylamino-2,6-dichlor-1,3,5-s-triazin,
V: Kondensationsprodukt aus N,N'-Bis-(2,2,6,6,-Tetramethyl-4-piperidyl)-hexamethylendiamin und 4-Morpholino-2,6-dichlor-1,3,5-triazin oder
VI. Kondensationsprodukt aus 2,4-Dichlor-6-(4-n-butytamino-2,2,6,6-tetramethyl-piperidyl)-1,3,5-triazin und 1,2-Bis-(3-{4',6'-di-(4''-n-butylamino-2",2",6",6"-tetramethylpiperidyl)-1',3',5'-triazinyl}aminopropylamino)äthan in den Kunststoff inkorporiert wird.

Ein weiterer Gegenstand der Erfindung ist die Verwendung in Formkörpern, z.B. Folien, Platten, Extrusionsartikel und Fasern sowie darus hergestellte Produkte wie Bändchen, Ge-webe oder Vliese, hergestellt aus den erfindungsgemäßen Kunststoffen, speziell Polyolefinen (Homo- und Copolymere), besonders HDPE, bevorzugt LDPE (Homound Copolymere) oder PP, besonders bevorzugt LDPE (Homo- und Copolymere mit EVA), LLDPE oder PP.

Die Verbindungen I, II oder III sowie beliebige Mischungen, auch mit Verbindung IV, V und/oder VI werden eingesetzt in Konzentrationen von 0,001 bis 5 Gew.-%, vorzugsweise von 0,02 bis 1 Gew.-% bezogen auf das organische Material und werden vor, während oder nach seiner Herstellung zugesetzt.

Zu den Kunststoffen, die in der erfindungsgemäßen Weise stabilisiert werden können, gehören folgende Stoffe:
1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen, wie beispielsweise Cyclopenten oder Norbornen.
2. Mischungen der unter 1. genannten Polymeren, beispielsweise Mischungen von Polypropylen mit Polyethylen oder mit Polyisobutylen.
3. Copolymere von Mono- und Diolefinen untereinander oder mit anderen Vinylmonomeren, wie beispielsweise Ethylen-Propylen-Copolymere, Propylen-Buten-1-Copolymere, Propylen-Isobutylen-Copolymere, Ethylen-Buten-1-Copolymere, Ethylen-Hexen-Copolymere, Ethylen-Octen-Copolymere, Propylen-Butadien-Copolymere, Ethylen-Alkylmethacrylat-Copolymere, Ethylen-Vinylacetat-Copolymere oder Ethylen-Acrylsäure-Copolymere sowie Terpolymere von Ethylen mit Propylen und einem Dien, wie Hexadien, Dicyclopentadien oder Ethylidennorbornen.

Das durch die erfindungsgemäßen Verbindungen stabilisierte organische Material kann gegebenenfalls noch weitere Additive enthalten, beispielsweise Verarbeitungsstabilisatoren, Antioxidantien, Lichtstabilisierungsmittel, Säurefänger, Metalldesaktivatoren, Antitaumittel, Nukleierungsmittel, antistatische Mittel, flammhemmende Mittel, Pigmente und Füllstoffe.

Antioxidantien und Lichtstabilisatoren, die neben den erfindungsgemäßen Verbindungen zugesetzt werden können, sind beispielsweise Verbindungen auf der Basis sterisch gehinderter Amine oder sterisch gehinderter Phenole oder Derivate des 2-Hydroxybenzophenons oder des 2-(2'-Hydroxyphenyl)-benztriazols oder Schwefel oder Stickstoff oder Phosphor enthaltende Costabilisatoren.

Als derartige Verbindungen kommen beispielsweise in Frage:

### 1. Antioxidantien

1.1 Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(β-Methylcyclohexyl)-4,6-dimethylphenol, 2,6-Di-octadecyl-4-methylphenol, 2,4,6-Tricyclohexylphenol, 2,6-Di-tert-butyl-4-methoxymethylphenol, 2,6-Di-nonyl-4-methylphenol, 2,4-Dimethyl-6-(1'-methyl-undec 1'-yl)-phenol, 2,4-Dimethyl-6-(1'methyl-heptadec-1'-yl)-phenol, 2,4-Dimethyl-6-(1'-methyl-tridec-1'-yl)-phenol und Mischungen davon.

1.2 Alkylthiomethylphenole, z.B. 2,4-Di-octylthiomethyl-6-tert-butylphenol, 2,4-Dioctylthiomethyl-6-methylphenol, 2,4-Di-octylthiomethyl-6-ethylphenol, 2,6-Di-dodecylthiomethyl-4-nonylphenol.

1.3 Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenol-stearat, Bis-(3,5-di-tert-butyl-4-hydroxyphenyl)adipat.

1.4 Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methyl-phenol), 4,4'-Thio-bis-(3,6-di-sec-amylphenol), 4,4'-Bis-(2,6-dimethyl-4-hydroxyphenyl)-disulfid.

1.5 Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(β-methylcyclohexyl)-phenol], 2,2'-Methylen-bis-(4-methyl-6-cyclohexylphenol), 2,2'-Methylenbis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(β-methylbenzyl)-4-nonylphenol], 2,2'-Methylen-bis-[6-(β,β-dimethylbenzyl)-4-nonylphenol], 4,4'-Methylen-bis-(2,6-di-tertbutylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methyl-phenyl)-butan, 1,1-Bis-(5-tert-butyl-4-hydroxy-2-methylphenyl)-3-n-dodecyl-mercaptobutan, Bis-(3-tertbutyl-4-hydroxy-5-methyl-phenyl)-dicyclopentadien, Bis-[2-(3'-tert-butyl-2'hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-ndodecylmercaptobutan, 1,1,5,5-Tetra-(5-tert-butyl-4-hydroxy-2-methylphenyl)-pentan.

1.6 O-, N- und S-Benzylverbindungen, z.B. 3,5,3',5'-Tetra-tert-butyl-4,4'dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-di-thioterephthalat, Bis-(3,5-di-tert-butyl-4-hydroxybenzyl)-sulfid, Isooctyl-3,5-di-tert-butyl-4-hydroxybenzyl-mercaptoacetat.

1.7 Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-ma-lonat, Didodecylmercaptoethyl-2,2-bis-(3,5-di-tert-butyl-4-hydroxybenzyl)-malonat.

1.8 Hydroxybenzyl-Aromaten, z.B. 1,3,5-Tris-(3,5-di-tert-butyl-4-hydroxybenzyl)-2,4,6-trimethylbenzol, 1,4-Bis-(3, 5-di-tert-butyl-4-hydroxybenzyl)-2,3,5,6-tetramethylbenzol, 2,4,6-Tris-(3,5-di-tert-butyl-4-hydroxybenzyl)-phenol.

1.9 Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-tert-butyl-4-hydroxybenzyl)-isocyanurat, 1,3,5-Tris-(4-tertbutyl-3-hydroxy-2, 6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxy-phenylpropionyl)-hexahydro-1,3,5-triazin, 1,3,5-Tris-(3,5-dicyclohexyl-4-hydroxybenzyl)-isocyanurat.

1.10 Benzylphosphonate, z.B. Dimethyl-2,5-di-tert-butyl-4-hydroxy-benzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-di-tert-butyl-4-hydroxybenzylphosphonsäuremonoethylesters.

1.11 Acylaminophenole, z.B. 4-Hydroxy-laurinsäureanilid, 4-Hydroxy-stearinsäureanilid, N-(3,5-di-tert-butyl-4-hydroxyphenyl)-carbaminsäureoctylester.

1.12 Ester der β-(3,5-Di-tert-butyl-4-hydroxyphenyl)-propionsäure mit ein- oder mehrwertigen Alkoholen, wie mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-iso-cyanurat, N,N'-Bis-(hydroxy)ethyl-oxaisäurediamid, 3-Thiaundecanol, 3-Thiapenta-decanol, Trimethylhexandiol, Trimethylolpropan, 4-Hydroxymethyl-1-phospha-2,6,7-trioxabicyclo-[2,2,2]-octan.

1.13 Ester der β-(5-tert-Butyl-4-hydroxy-3-methylphenyl)-propionsäure mit einoder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodietyhlenglycol, Diethylenglycol, Triethylenglycol, Pentaerythrit, Tris-(hydroxy)-ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2,2,2]-octan.

1.14 Ester der β-(3,5-Dicyclohexyl-4-hydroxyphenyl)-propionsäure mit ein- oder mehrwertigen Alkoholen, wie z.B. Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocya-nurat, N,N'-Bis-(hydroxyethyl)-oxalsäurediamid, 3-Thiaundecanol, 3-Thiapenta-decanol, Trimethylhexandiol, Trimethylolpropan, 4-Hydroxymethyl-1-phospha-2,6,7-trioxabicyclo-(2,2,2)-octan.

1.15 Ester der 3,5-Di-tert-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylen-glycol, Diethytenglycol, Triethylenglycol, Pentaerythrit, Tris(hydroxy)ethyl-isocya-nurat, N,N'-Bis-(hydroxyethyl)-oxalsäurediamid, 3-Thiaundecanol, 3-Thiapenta-decanol, Trimethylhexandiol, Trimethytolpropan, 4-Hydroxymethyl-1-phospha-2,6,7-trioxabicyclo-[2,2,2]-octan.

1.16 Ester der 3,3-Bis-(3'-tert-bulyl-4'-hydroxyphenyl)-buttersäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodietyhlenglycol, Diethylenglycol, Triethylenglycol, Pentaerythrit, Tris-(hydroxy)-ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2,2,21-octan.

1.17 Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N' -Bis-(3,5-di-tert-butyl-4-hydroxyphenylpropionyl)-trimethylendiamin, N,N'-Bis-(3,5-ditert-butyl-4-hydroxyphenylpropionyl)-hydrazin.

1.18 Hydroxylamine, z.B. Dialkylhydroxylamine wie beispielsweise N,N-Dibenzylhydroxylamin, N,N-Diethylhydroxylamin, N,N-Dioctylhydroxylamin, N,N-Dilauryl-hydroxylamin, N,N-Ditetradecylhydroxylamin,N,N-Dihexadecylhydroxylamin, N,N-Dioctadecylhydroxylamin, N-Hexadecyl-N-octadecylhydroxylamin, N,N-Dialkyl-hydroxylamin abgeleitet von hydriertem Talgamin.

### 2. UV-Absorber und Lichtschutzmittel

2.1 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'hydroxyphenyl)-benztriazol, 2-[2'-Hydroxy-5'-(1,1,3,3-tetramethylbutyl)phenyl]-benztriazol, 2-(3',5'-Di-tert-butyl-2'-hydroxyphenyl)-5-chlor-benztriazol,2-(3'-tert-Butyl-2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(β,β-dimethylbenzyl)-2'-hydroxyphenyl)-benztriazol, Mischung aus 2-(3'-tert-Butyl-2'-hydroxy-5'-(2-octyloxycarbonylethyl)-phenyl)-5-chlor-benztriazol, 2-(3'-tert-Butyl-5'-[2-(2-ethylhexyloxyl-carbonylethyl)-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl]-2'-hydroxyphenyl)-benztriazol, 2-(3'-Dodecyl-2'hydroxy-5'-methylphenyl)-benztriazol, und 2-(3'-tert-Butyl-2'-hydroxy-5'-(2-isooctylocycarbonylethyl)phenyl-benztriazol, 2,2'-Methylen-bis-[4-(1,1,3,3-tetramethylbutyl)-6-benztriazol-2-yl-phenol]; Umesterungsprodukt von 2-[3'-tert-Butyl-5'(2-methoxycarbonylethyl]-2'-hydroxy-phenyl]-benztriazol mit Polyethylenglycol 300; [R-CH₂CH₂-COO(CH₂)₃]₂ mit R = 3'-tert-Butyl-4'-hydroxy-5'-2H-benz-triazol-2-yl-phenyl; [R-CH₂CH₂-COO(CH₂CH₂O)_{n/2}]₂ mit n = 1 bis 5 und mit R = 3'-tert-Butyl-4'-hydroxy-5'-2H-benztriazol-2-yl-phenyl.

2.2 2-Hydroxybenzophenone, wie z.B. das 4-Hydroxy-, 4-Methoxy-, 4-Octoxy, 4-Decyloxy, 4-Dodecyloxy-, 4-Benzyloxy-, 4,2',4'-Trihydroxy-, 2'-Hydroxy-4,4'dimethoxy-Derivat.

2.3 Ester von gegebenenfalls substituierten Benzoesäuren, wie z.B. 4-tert-Butylphenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxy-benzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tertbutyl-4-hydroxybenzoesäure-2-methyl-4,6-di-tert-butyfphenylester.

2.4 Acrylate wie z.B. β-Cyan-β,β-diphenylacrylsäure-ethylester bzw. -isooctylester, β-Carbomethoxy-zimtsäuremethylester, β-Cyano-β-methyl-p-methoxy-zimtsäuremethylester bzw. -butylester, β-Carbomethoxy-p-methoxy-zimtsäure-methylester, N-(β-Carbomethoxy-β-cyanovinyl)-2-methyl-indolin.

2.5 Nickelverbindungen wie z.B. Nickelkomplexe des 2,2'-Thio-bis-[4-(1,1,3,3 tetramethylbutyl)-phenols] wie der 1:1 oder der 1:2 Komplex, gegebenenfalls mit zusätzlichen Liganden, wie n-Butylamin, Triethanolamin oder N-Cyclohexyldietha-nolamin, Nickeldibutyldithiocarbamat, Nickelsalze von 4-Hydroxy-3,5-di-tertbutyl-benzylphosphonsäure-monoalkylestern, wie vom Methyl- oder Ethylester, Nickel-komplexe von Ketoximen, wie von 2-Hydroxy-4-methyl-phenylundecylketoxim, Nickelkomplexe des 1-Phenyl-4-lauroyl-5-hydroxy-pyrazols, gegebenenfalls mit zusätzlichen Liganden.

2.6 Sterisch gehinderte Amine, wie z.B. Bis-(2,2,6,6-tetramethyl-piperidyl)-sebacat, Bis-(2,2,6,6-tetramethyl-piperidyl)-glutarat, Bis-(2,2,6,6-tetramethylpiperidyl)-succinat, Bis-(1,2,2,6,6-pentamethylpiperidyl)-sebacat, Bis-(1,2,2,6,6-pentamethylpiperidyl)-glutarat, Bis-(1,2,2,6,6-pentamethylpiperidyl)-sebacat, n-Butyl-3,5-di-tert-butyl-4-hydroxybenzyl-malonsäure-bis(1,2,2,6,6-pentamethylpiperidyl)-ester, 2,2,6,6-Tetramethylpiperidylbehenat, 1,2,2,6,6-Pentamethylpiperidylbehenat, Tris-(2,2,6,6-tetramethyl-4-piperidyl)-nitrilotriacetat, Tetrakis-(2,2,6,6-tetramethyl-4-piperidyl)-1,2,3,4-butantetraoat, Tetrakis-(1,2,2,6,6-pentamethyl-4-piperidyl)-1,2,3,4-butantetraoat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, 4-Stearoyloxy-2,2,6,6-tetramethyl-piperidin, 4-Stearyloxy-1,2,2,6,6-pentamethylpiperidin, 4-Stearoyloxy-1,2,2,6,6-pentamethylpiperidin, Bis-(1,2,2,6,6-pentamethylpiperidyl)-2-n-butyl-2-(2-hydroxy-3, 5-di-tert-butyl-benzyl)-malonat, Bis-(1,2,2,6,6-pentamethylpiperidyl)-2-n-butyl-2-(4-hydroxy-3,5-di-tertbutylbenzyl)-malonat, 3-n-Octyl-7,7,9,9-tetramethyl-1,3,8-triazaspiro [4,5] decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-methoxypropylamino-2,2,6,6-tetramethylpiperidyl)-1,3,5-triazin und 1,2-Bis-(3-aminopropylamino)äthan, Kondensationsprodukt aus 2-Chlor-4,6-di-(4-methoxy-propylamino-1,2,2,6,6-pentamethylpiperidyl)-1,3,5-triazin und 1,2-Bis-(3-amino-propytamino)-äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, Umsetzungsprodukte von 2-Chlor-4,6-di-(4-n-butylamino-2,2,6,6-tetra-methylpiperidyl)-1,3,5-triazin mit ein- oder mehrwertigen Aminen, wobei zwischen einem und allen aktiven H-Atomen am Amin ersetzt werden, wie mit Ethylen-diamin, Di-ethylentriamin, Triethylentetramin, Hexamethylendiamin, 1,2-Bis-(3-aminopropylamino)äthan, Umsetzungsprodukte von 2-Chlor-4,6-di-(4-nbutyl-amino-1,2,2,6,6-pentamethylpiperidyl)-1,3,5-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexa-methylendiamin, 1,2-Bis-(3-aminopropylamino)äthan, Umsetzungsprodukte von 2-Chlor-4,6-di-(4-n-butylamino-2,2,6,6-tetramethylpiperidyl)-1,3,5-triazin und 4-tert-Octylamino-2,6-dichlor-1,3,5-s-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropyl-amino)äthan, Umsetzungsprodukte von 2-Chlor-4,6-di-(4-nbutyl-amino-1,2,2,6,6-pentamethylpiperidyl)-1,3,5-triazin und 4-tert-Octylamino-2,6-dichlor-1,3,5-s-tri-azin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-amino-propylamino)äthan, Umsetzungsprodukte von 2-Chlor-4,6-di-(4-nbutylamino-2,2,6,6-tetramethylpiperidyl)-1,3,5-triazin und 4-(4-n-Butylamino-2,2,6,6-tetra-methylpiperidyl)-2,6-dichlor-1,3,5-s-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropyl-amino)äthan, Umsetzungsprodukte von 2-Chlor-4,6-di-(4-n-butylamino-1,2,2,6,6-pentamethylpiperidyl)-1,3,5,-triazin und 4-(4-n-Butylamino-2,2,6,6-tetramethyl-piperidyl)-2,6-dichlor-1,3,5-s-triazin mit ein- oder mehrwer-tigen Aminen, wobei zwischen einem und allen aktiven H-Atomen am Amin er-setzt werden, wie mit Ethylendiamin, Diethylentriamin, Triethylentetramin, Hexamethylendiamin, 1,2-Bis-(3-aminopropylamino)äthan, 3-Dodecyl-7,7,9,9-tetra-methyl-1,3,8-triaza-spiro[4,5]decan-2,4-dion, oligomerisiertes 2,2,4,4-Tetra-methyl-20-(oxiranyl-methyl)-7-oxa-3,20-diazadispiro[5.1.11.2]heneicosan-21-on, oligomerisiertes 1,2,2,4,4-Pentamethyl-20-(oxiranylmethyl)-7-oxa-3, 20-diaza-dispiro [5.1.11,2]heneicosan-21-on, oligomerisiertes 1-Acetyl-2,2,4,4-tetramethyl-20-(oxiranylmethyl)-7-oxa-3,20-diazadispiro[5.1.11.2]heneicosan-21-on, Dodecyl-1-(2,2,4,4-tetramethyl-4-piperidyl)-pyrrolidin-2,5-dion, 3-Dodecyl-1-(1,2,2,6,6-pentamethyl-4-piperidyl)-pyrrolidin-2,5-dion, 2,2,4,4-Tetramethyl-7-oxa-3,20-diaza-dispiro-[5.1.11.2]-heneicosan-21 -on, 2,2,4,4-Tetramethyl-7-oxa-21-oxo-3,20-diaza-dispiro-[5.1.11.2]-heneicosan-3-propansäure-dodecylester, 2,2,4,4-Tetramethyl-7-oxa-21-oxo-3,20-diaza-dispiro-[5.1.11.2]-heneicosan-3-propan-säure-tetradecylester, 2,2,3,4,4-Pentamethyl-7-oxa-3,20-diaza-dispiro-[5.1.11.2]-heneicosan-21-on, 2,2,3,4,4-Pentamethyl-7-oxa-21-oxo-3, 20-diaza-dispiro-[5.1.11.2]-henaicosan-3-propansäure-dodecylester, 2,2,3,4,4-Pentamethyl-7-oxa-21-oxo-3,20-diaza-dispiro-[5.1.11.2]-heneicosan-3-propansäure-tetradecylester, 3-Acetyl-2,2,4,4-tetramethyl-7-oxa-3,20-diazadispiro-[5.1.11.2]-heneicosan-21-on, 3-Acetyl-2,2,4,4-tetramethyl-7-oxa-21-oxo-3,20-diaza-dispiro-[5.1.11.2]-heneicosan-3-propansäure-dodecylester, 3-Acetyl-2,2,4,4-tetramethyl-7-oxa-21-oxo-3,20-diaza-dispiro-[5.1.11.2]-heneicosan-3-propansäure-tetradecylester, 1,1',3,3',5,5'-Hexahydro-2,2',4,4',6,6'-hexaaza-2,2',6,6'-bismethano-7,8-dioxo-4,4'-bis-(1,2,2,6,6-pentamethyl-4-piperidyl)-biphenyl, Poly-N,N'-bis-(2,2,6,6-Tetramethyl-4-piperidyl)-1,8-diazadecylen, Additionsverbindung von 2,2,6,6-Tetramethyl-4-allyloxy-piperidin und Polymethylhydrogensiloxan (Molmasse bis 4000), Additionsverbindung von 1,2,2,6,6-Pentamethyl-4-allyloxy-piperidin und Polymethylhydrogensiloxan (Molmasse bis 4000), N,N'-Di-formyl-N,N'-bis-(2,2,6,6-Tetramethyl-4-piperidinyl)-hexamethylendiamin, N,N'-Di-formyl-N,N'-bis-(1,2,2,6,6-pentamethyl-4-piperidinyl)-hexa-methylendiamin, 5,11-Bis-(2,2,6,6-tetramethyl-4-piperidinyl)-3,5,7,9,11,13-hexaaza-tetracyclo-[7.4.0.0^{2,7}.1^{3,13}]-tetradecan-8,14-dion, 5,11-Bis-(1,2,2,6,6-pentamethyl-4-piperidinyl)-3,5,7,9,11,13-hexaaza-tetracyclo-[7.4.0.0^{2,7}.1^{3,13}]-tetradecan-8,14-dion, 7,7,9,9-Tetramethyl-8-acetyl-3-dodecyl-1,3,8-triaza-spiro-[4.5]-decan-2,4-dion, [(4-Methoxyphenyl)-methylenl-propandisäure-bis-(2,2,6,6-tetramethyl-4-piperidinyl)-ester, [(4-Methoxyphenyl)-methylen]-propandisäure-bis-(1,2,2,6,6-pentamethyl-4-piperidinyl)-ester, 2,4,6-Tris-(N-cyclohexyl-N-[2-(3,3,4,5,5-pentamethyl-piperazinon-1-yl)-ethyl]-amino)-1,3,5-triazin, Copolymerisat aus Styrol mit β-Methylstyrol und Maleinsäureanhydrid umgesetzt mit 4-Amino-1,2,2,6,6-pentamethylpiperidin und Octadecylamin, Polycarbonat mit 2,2'-[(2,2,6,6-Tetramethyl-4-piperidinyl)-imino]-bis-[ethanol] als Diolkomponente, Polycarbonat aus 2,2'-[(1,2,2,6,6-Pentamethyl-4-piperidinyl)-imino]-bis-[ethanol] als Diolkomponente, Copolymer aus Maleinsäureanhydrid und einem β-Olefin bis C30 umgesetzt mit 4-Amino-2,2,6,6-tetra-methylpiperidin, Copolymer aus Maleinsäureanhydrid und einem β-Olefin bis C30 umgesetzt mit 1-Acetyl-4-amino-2,2,6,6-tetramethylpiperidin, Copolymer aus Maleinsäureanhydrid und einem β-Olefin bis C30 umgesetzt mit 4-Amino-1,2,2,6,6-pentamethylpiperidin, 20,20'-(2-Hydroxy-1,3-propandiyl)bis[2,2,4,4,-tetramethyl-7-oxa-3,20-diazadispiro[5.1.11.2]heneicosan-21-on], 20,20'-(2-Acetyloxy-1,3-propandiyl)bis[3-acetyl-2,2,4,4-tetramethyl-7-oxa-3,20-diaza-dispiro[5.1.11.2]heneicosan-21-on], 20,20'-(2-Methyloxy-1,3-propandiyl) bis[2,2,4,4-tetramethyl-7-oxa-3, 20-diazadispiro[5.1.11.2]heneicasan-21-on], 20,20'-(2-Hydroxy-1,3-propandiyl)bis[1,2,2,4,4-pentaamethyl-7-oxa-3,20-diazadispiro[5.1.11.2]heneicosan-21-on], 20,20'-(2-Methyloxy-1,3-propandiyl)-bis[1,2,2,4,4-pentaamethyl-7-oxa-3,20-diazadispiro[5.1.11.2]heneicosan-21-on], 20,20'-(2-Trimethylsilyloxy-1,3-propandiyl)bis[2,2,4,4-tetramethyl-7-oxa-3,20-diazadispiro[5.1.11.2]heneicosan-21-on], 20,20'-(2-Phenylaminocarbonyloxy-1,3-propandiyl)bis[2,2,4,4-tetramethyl-7-oxa-3,20-diazadispiro[5.1.11.2]heneicosan-21-on] sowie die N-Alkyl- und N-Aryloxyderivate der oben genannten Verbindungen mit freien NH-Gruppen am Piperidin, speziell β-Methylbenzyloxy- und Alkyloxy von C1 bis C18.

2.7 Oxalsäurediamide, wie z.B. 4,4'-Di-octyloxy-oxanilid, 2,2'-Di-octyloxy-5,5'-ditert-butyl-oxanilid, 2,2'-Di-dodecyloxy-5,5'-di-tert-butyl-oxanilid, 2-Ethoxy-2'-ethyloxanilid, N,N'-Bis-(3-dimethylaminopropyl)-oxalamid, 2-Ethoxy-5-tert-butyl-2'ethyloxanilid und dessen Gemisch mit 2-Ethoxy-2'-ethyl-5,4'-di-tert-butyl-oxanilid, Gemische von o- und p-Methoxy- sowie von o- und p-Ethoxy-disubstituierten Oxaniliden.

2.8 2-(2-Hydroxyphenyl) -1,3,5-triazine, wie z.B. 2,4,6-Tris-(2-hydroxy-4-octyloxyphenyl)-1,3,5-triazin, 2-(2-Hydroxy-4-octyloxyphenyl)-4, 6-bis-(2,4-dimethylphenyl)-1,3,5-triazin, 2-(2,4-Dihydroxyphenyl)-4,6-bis-(2,4-dimethylphenyl)-1,3,5-triazin, 2-(2,4-Dihydroxyphenyl)-4,6-bis-(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hy-droxy-4-octyloxyphenyl)-4,6-bis(4-methylphenyl)-1,3,5-triazin, 2-(2-Hydroxy-4-dodecyloxyphenyl)-4, 6-bis(2,4-di-methylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethyl-phenyl)-1,3,5-triazin.

3. Metalldesaktivatoren, wie z.B. N,N'-Diphenyloxalsäurediamid, N-Salicylal-N'salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacin-säure-bisphenylhydrazid, N,N'-Diacetyl-adipinsäure-dihydrazid, N,N'-bis-salicyloyl-oxalsäuredihydrazid, N,N'-Bis-salicyloyl-thiopropionsäure-dihydrazid, 2,2'-Ox-amidobis-(ethyl-3-(3,5-di-tert-butyl-4-hydroxyphenyl)propionat), Oligomeres aus Phosphortrichlorid und 4,4'-Di-(5-tert-butyl-4-hydroxy-2-methylphenyl)thioether.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tertbutylphenyl)-phosphit, Diisodecylpentaerythrit-diphosphit, Bis-(2,4-di-tertbutyl-phenyl)-pentaerythritdiphosphit, Bis-stearyl-pentaerythritdiphosphit, Bis-(2,6-di-tert-butyl-4-methylphenyl)-pentaerythritdiphosphit, Bis-isodecyloxypentaerythrit-diphosphit, Bis-(2,4-di-tert-butyl-6-methylphenyl)-pentaerythritdiphosphit, Bis-(2,4,6-tri-tert-butylphenyl)-pentaerytritdiphosphit, Tristearyl-sorbit-triphosphit, Tetrakis-(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphophocin, Bis-(2,4-di-tert-butyl-6-methylphenyl)-methylphosphit, Bis-(2,4-ditert-butyl-6-methylphenyl)-ethylphosphit, Tris(2-tert-butyl-4-thio(2'-methenyl-4'hydroxy-5'-tert-butyl)-phenyl-5-methenyl)-phenylphosphit, 2,2 ',2''-Nitrilo-ethanol-tris-(3,3',5,5'-tetra-tert-butyl-1,1'-biphenyl-2,2'diyl)phosphit, 2,2',2''-Nitriloethanol-tris-(3,3',5,5'-tetra-tert-butyl-1,1'-biphenyl-2,2'-diyl) phosphit, Bis-(2,4-dicumyl-phenyl)pentaerythritoldiphosphit.

5. Peroxidzerstörende Verbindungen wie z.B. Ester der Thio-dipropionsäure, beispielsweise der Lauryl-, Stearyl-, Myristyl- oder Tridecylester, Mercaptobenzimidazol, das Zinksalz des 2-Mercaptobenzimidazols, Zink-alkyldithiocarbamate, Zinkdibutyl-dithiocarbamat, Dioctadecylmonosulfid, Diotadecyldisulfid, Penta-erytrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimon-brenzcatechinat oder Zinnbrenzcatechinat, Metalloxide wie z.B. Magnesiumoxid, Zinkoxid, sowie Säurefänger auf der Basis des Ionenaustauschers oder Molsiebs wie z.B. Hydrotalcite oder Zeolithe.

8. Nukleierungsmittel, wie z.B. 4-tert-Butylbenzoesäure, Adipinsäure, Diphenylessigsäure, Natriumbenzoat, Talkum, Mono- oder Dibenzylidensorbitole gegebenenfalls substituiert.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit, Zeolithe, IR-aktive Substanzen und IR-Reflektoren wie z.B. Zeolithe oder Silikate.

### 10. Benzofuranone

### 11. Antitaumittel wie Ester des Sorbitols oder Glycerins

### 12. Antistatika wie ethoxylierte Amine, Alkansulfonate, Fettsäureester, quartäre Ammoniumverbindungen.

### 13. Pigmente wie Titandioxid, Ruß, anorganische und organische Farbpigmente.

### 14. Sonstige Zusätze, wie z.B. Weichmacher, Gleitmittel, Emulgatoren, optische Aufheller, Flammschutzmittel, Antistatika, Treibmittel.

Die Additive werden nach allgemein üblichen Methoden in die organischen Polymeren eingearbeitet. Die Einarbeitung kann beispielsweise durch Einmischen oder Aufbringen der Verbindungen und gegebenenfalls weiterer Additive in oder auf das Polymere unmittelbar nach der Polymerisation oder in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösungsmittels kann die Einarbeitung erfolgen. Die Verbindungen sind auch wirksam, wenn sie in ein bereits granuliertes Polymer nachträglich in einem gesonderten Verarbeitungsschritt eingebracht werden.

Die erfindungsgemäß zu verwendenden Verbindungen können auch in Form eines Masterbatches, der diese Verbindungen beispielsweise in einer Konzentration von 1 bis 75, vorzugsweise 2,5 bis 30 Gew.-% enthält, den zu stablilisierenden Polymeren zugesetzt werden.

Aus den erfindungsgemäß stabilisierten Polymeren lassen sich alle Gegenstände herstellen, die üblicherweise aus diesen Polymeren sind. Das können beispielsweise sein dünne Fasern von 1 dtex bis zu dicken Monofilamenten mit 5mm Durchmesser sowie daraus hergestellte Gegenstände wie beispielsweise Vliese zur Ernteverfrühung oder geblasene oder extrudierte Folien von 0,01 mm bis zu 3 mm Dicke, verstreckt oder nicht verstreckt, die direkt eingesetzt werden oder z.B. zu Bändchen weiterverarbeitet werden oder Platten mit bis zu 5 mm Materialstärke die z.B. im Gewächshausbau eingesetzt werden können.

### Beispiele:

Die nachfolgenden Beispiele sollen die Erfindung näher erläutern.

Als Beispiele für Schwefelquellen wurden Schwefelwasserstoff, Schwefeldioxid/Schweflige Säure und Natrium-N-methyldithiocarbamat eingesetzt.

### Beispiel 1: Herstellung der Folien

- 2000 g: LDPE
- 3 g: HALS
Das sterisch gehinderte Amin wird in 300 ml Aceton gelöst, zum LDPE-Pulver gegeben und das Lösungsmittel im Rotationsverdampfer bei 60°C wieder abdestilliert; zuletzt im Wasserstrahlvakuum. Das Pulver wird zweimal extrudiert und granuliert (Temperaturprofil 130°C/150°C/170°C, 125 Upm). Das Granulat wird in einem Göttfert-Laborextruder mit Folienblaskopf (Temperaturprofil 160°C/170°C /180°C /200°C /200°C /200°C, 50 Upm) zu einer 200µ-Folie verarbeitet.

### Beispiel 2: Einfluß von Schwefelwasserstoff

Der Einfluß von Schwefelwasserstoff auf die Lebensdauer der Folien wird durch folgenden Testzyklus festgestellt (in Anlehnung an DIN 53 387): nach jeweils 125 Stunden Belichtung im Xenotest 450 (Relative Luftfeuchtigkeit 20%, Schwarztafeltemperatur 50°C) folgen 2 Stunden Behandlung mit Schwefelwasserstoff. Dazu werden die Probekörper für 2 Stunden in reiner Schwefelwasserstoffatmosphäre im Dunkeln gelagert. Danach beginnt der Zyklus von vorne. Nach jeweils 250 Stunden (250h, 500h, 750h, .... bis 1750h) wird der Schwefelgehalt der Probekörper bestimmt. In Tabelle 1 ist die durchschnittliche Schwefelaufnahme pro Behandlung mit Schwefelwasserstoff angegeben.

**Tabelle 1**

| Durchschnittliche Schwefelaufnahme pro Behandlung mit Schwefelwasserstoff | |
|---|---|
| HALS | ppm Schwefel |
| ----------------- | 14 |
| IV | 20 |
| II | 14 |
| III/IV = 1:1 | 15 |
| III/V = 1:1 | 14 |
| III/VI = 1:1 | 16 |
| I | 12 |

### Beispiel 3: Einfluß von Schwefeldioxid / Schwefliger Säure

Der Testzyklus ist wie unter Beispiel 2 beschrieben. Die Folien wurden jedoch für 2 Stunden in 0.1 N Schweflige Säure eingetaucht. Nach dem Antrocknen der anhaftenden Schwefligen Säure wird erneut belichtet. Vor der Schwefelbestimmung wurden die Probekörper gründlich mit demineralisiertem Wasser abgewaschen, um Fehler durch anhaftende Schwefelverbindungen zu vermeiden. In Tabelle 2 ist die durchschnittliche Schwefelaufnahme pro Behandlung mit Schwefliger Säure angegeben.

### Tabelle 2: Durchschnittliche Schwefelaufnahme pro Behandlung mit Schwefliger Säure

| HALS | ppm Schwefel |
|---|---|
| ----------- | 17 |
| IV | 30 |
| I | 24 |

### Beispiel 4: Einfluß von Natrium-N-methyldithiocarbamat

Der Testzyklus ist wie unter Beispiel 2 beschrieben. Die Folien wurden jedoch für 2 Stunden in eine 3%ige Lösung von Natrium-N-methyldithiocarbamat eingetaucht. Nach dem Antrocknen der anhaftenden Lösung wird erneut belichtet. Vor der Schwefelbestimmung wurden die Probekörper mit demineralisiertem Wasser abgewaschen, um Fehler durch anhaftende Schwefelverbindungen zu vermeiden. In Tabelle 3 ist die durchschnittliche Schwefelaufnahme pro Behandlung mit Natrium-N-methyldithiocarbamat angegeben.

### Tabelle 3: Durchschnittliche Schwefelaufnahme pro Behandlung mit Natrium-N-methyldithiocarbamat

| HALS | ppm Schwefel |
|---|---|
| ----------------- | 62 |
| IV | 62 |
| II | 53 |
| III/IV = 1:1 | 54 |
| III/V = 1:1 | 53 |
| III/VI = 1:1 | 55 |
| V | 63 |
| VI | 62 |
| I | 49 |

## Patentansprüche

1. Verwendung mindestens eines in einen Kunststoff inkorporierten hochmolekularen, sterisch gehinderten Amins aus der Gruppe bestehend aus
I: Oligomerisiertes 2,2,4,4-Tetramethyl-20-(oxiranylmethyl)-7-oxa-3,20-diazadispiro[5.1.11.2]heneicosan-21-on,
II: Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan oder
III: Kondensationsprodukt aus 1-Hydroxyethyl-2,2,6,6-tetramethyl-4-hydroxypiperidin und Bernsteinsäure,
zur Verringerung der Aufnahme schwefelhaltiger Verbindungen in den Kunststoff.

2. Verwendung gemäß Anspruch 1, **dadurch gekennzeichnet, daß** mindestens ein sterisch gehindertes Amin der Formel I, der Formel II oder der Formel III sowie mindestens ein Amin ausgewählt aus der Gruppe bestehend aus
IV: Kondensationsprodukt aus N,N'-Bis-(2,2,6,6-Tetramethyl-4-piperidyl)-hexamethylendiamin und 4-tert-Octylamino-2,6-dichlor-1,3,5-s-triazin,
V: Kondensationsprodukt aus N,N'-Bis-(2,2,6,6,-Tetramethyl-4-piperidyl)-hexamethylendiamin und 4-Morpholino-2,6-dichlor-1,3,5-triazin oder
VI. Kondensationsprodukt aus 2,4-Dichlor-6-(4-n-butylamino-2,2,6,6tetramethylpiperidyl)-1,3,5-triazin und 1,2-Bis-(3-{4',6'-di-(4"-n-butylamino-2",2",6",6"tetramethylpiperidyl)-1 ',3',5'-triazinyl}-aminopropylamino)äthan
in den Kunststoff inkorporiert wird.

3. Verwendung gemäß Anspruch 1 oder 2, **dadurch gekennzeichnet, daß** in den Kunststoff ein Gesamtgehalt von 0.001 bis 5 Gew.%, bevorzugt 0.02 bis 1 Gew.%, bezogen auf das Gewicht des Kunststoffs, an hochmolekularem, sterisch gehindertem Amin inkorporiert wird.

4. Verwendung gemäß einem der Ansprüche 1 bis 3, **dadurch gekennzeichnet, daß** der Kunststoff ein Homo- oder Copolymer eines Mono- oder Diolefins ist.

5. Verwendung gemäß einem der Ansprüche 1 bis 3, **dadurch gekennzeichnet, daß** der Kunststoff eine Mischung der in Anspruch 4 genannten Polymeren ist.

6. Verwendung gemäß einem der Ansprüche 1 bis 3, **dadurch gekennzeichnet, daß** der Kunststoff ein Copolymer von Mono- oder Diolefinen untereinander oder mit anderen Vinylpolymeren ist.

7. Verwendung gemäß einem der Ansprüche 1 bis 6, **dadurch gekennzeichnet, daß** weitere Additive in den Kunststoff inkorporiert werden.

8. Verwendung gemäß einem der Ansprüche 1 bis 7, **dadurch gekennzeichnet, daß** als weitere Additive Antioxidantien, Antitaumittel, antistatische Mittel, flammhemmende Mittel, Füllstoffe, Lichtstabilisierungsmittel, Metalldesaktivatoren, Nukleierungsmittel, Pigmente, Säurefänger und/oder Verarbeitungsstabilisatoren in den Kunststoff inkorporiert werden.

9. Verwendung gemäss einem der Ansprüche 1 bis 8, **dadurch gekennzeichnet, dass** der Kunststoff in die Form von Folien, Platten, Extrusionsartikeln, Fasern, Vliesen, Bändchen, Geweben gebracht wird.

## Claims

1. The use of at least one high molecular weight, sterically hindered amine, incorporated into a plastic and selected from the group consisting of
I oligomerized 2,2,4,4-tetramethyl-20-(oxiranylmethyl)-7-oxa-3,20-diazadispiro[5.1.11.2]- heneicosan-21-one,
II condensation product of 2-chloro-4,6-di(4-n-butylamino-1,2,2,6,6-pentamethylpiperidyl)-1,3,5-triazine and 1,2-bis(3-aminopropylamino)ethane, and
III condensation product of 1-hydroxyethyl-2,2,6,6-tetramethyl-4-hydroxypiperidine and succinic acid,
for reducing the uptake of sulfur-containing compounds in the plastic.

2. The use as claimed in claim 1, where at least one sterically hindered amine of the formula I, of the formula II or of the formula III and also at least one amine selected from the group consisting of
IV condensation product of N,N'-bis(2,2,6,6-tetramethyl-4-piperidyl)hexa-methylenediamine and 4-tert-octylamino-2,6-dichloro-1,3,5-striazine,
V condensation product of N,N'-bis(2,2,6,6-tetramethyl-4-piperidyl)hexa-methylenediamine and 4-morpholino-2,6-dichloro-1,3,5-triazine, and
VI condensation product of 2,4-dichloro-6-(4-n-butylamino-2,2,6,6-tetra-methylpiperidyl)-1,3,5- triazine and 1,2-bis{3-[4',6'-di(4"-n-butylamino-2",2",6",6"-tetramethylpiperidyl)-1',3',5'-tri-azinyl]aminopropylamino}ethane
are incorporated into the plastic.

3. The use as claimed in claim 1 or 2, wherein a total content of high molecular weight, sterically hindered amine based on the weight of the plastic is from 0.001 to 5% by weight, preferably from 0.02 to 1% by weight, is in corporated into the plastic.

4. The use as claimed in any one of claims 1 to 3, wherein the plastic is a homo- or copolymer of a mono- or diolefin.

5. The use as claimed in any one of claims 1 to 3, wherein the plastic is a mixture of the polymers set forth in claim 4.

6. The use as claimed in any one of claims 1 to 3, wherein the plastic is a copolymer of mono- or diolefins with one another or with other vinyl polymers.

7. The use as claimed in any one of claims 1 to 6, wherein further additives are incorporated into the plastic.

8. The use as claimed in any one of claims 1 to 7, wherein antioxidants, antidew agents, antistatic agents, flame inhibitors, fillers, light stabilizers, metal deactivators, nucleating agents, pigments, acid scavengers and/or processing stabilizers are incorporated into the plastic as further additives.

9. The use as claimed in any one of claims 1 to 8, wherein the plastic is brought into the form of films, plates, extruded articles, fibers, nonwovens, tapes, woven fabrics.

## Revendications

1. Utilisation d'au moins une amine de masse moléculaire élevée, à empêchement stérique, choisie dans le groupe constitué par
I la 2,2,4,4-tétraméthyl-20-(oxirannylméthyl)-7-oxa-3,20-diazadispiro-[5.1.11.2]hénéicosan-21-one oligomérisée,
II le produit de condensation de 2-chloro-4,6-di(4-n-butylamino-1,2,2,6,6-pentaméthylpipéridyl)-1,3,5-triazine et de 1,2-bis(3-aminopropylamino)éthane ou
III le produit de condensation de 1-hydroxyéthyl-2,2,6,6-tétraméthyl-4-hydroxypipéridine et d'acide succinique,
incorporée dans une matière plastique, pour la diminution de la fixation de composés soufrés dans la matière plastique.

2. Utilisation selon la revendication 1, dans laquelle sont incorporées dans la matière plastique au moins une amine à empêchement stérique de formule I, de formule II ou de formule III ainsi qu'au moins une amine choisie dans le groupe constitué par
IV le produit de condensation de N,N'-bis(2,2,6,6-tétraméthyl-4-pipéridyl)hexaméthylènediamine et de 4-tert-octylamino-2,6-dichioro-1,3,5-triazine,
V le produit de condensation de N,N'-bis(2,2,6,6-tétraméthyl-4-pipéridyl)hexaméthylènediamine et de 4-morpholino-2,6-dichloro-1,3,5-triazine ou
VI le produit de condensation de 2,4-dichloro-6-(4-n-butylamino-2,2,6,6-tétra-méthylpipérldyl)-1,3,5-triazine et de 1,2-bis(3-{4',6'-di-(4"-n-butylamino-2",2",6",6"-tétraméthylpipéridyl)-1',3',5'-triazinyl}aminopropylamino)éthane.

3. Utilisation selon la revendication 1 ou 2, **caractérisée en ce qu'**une teneur totale de 0,001 à 5 % en poids, de préférence de 0,02 à 1 % en poids, par rapport au poids de la matière plastique, en amine de masse moléculaire élevée, à empêchement stérique, est incorporée dans la matière plastique.

4. Utilisation selon l'une quelconque des revendications 1 à 3, **caractérisée en ce que** la matière plastique est un homo- ou copolymère d'une mono- ou dioléfine.

5. Utilisation selon l'une quelconque des revendications 1 à 3, **caractérisée en ce que** la matière plastique est un mélange des polymères mentionnés dans la revendication 4.

6. Utilisation selon l'une quelconque des revendications 1 à 3, **caractérisée en ce que** la matière plastique est un copolymère de mono- ou dioléfines entre elles ou avec d'autres polymères vinyliques.

7. Utilisation selon l'une quelconque des revendications 1 à 6, **caractérisée en ce que** d'autres additifs sont incorporés dans la matière plastique.

8. Utilisation selon l'une quelconque des revendications 1 à 7, **caractérisée en ce que**, comme autres additifs, des antioxydants, des antigels, des agents antistatiques, des agents ignifuges, des charges, des photostabilisants, des inactivateurs de métaux, des agents de nucléation, des pigments, des capteurs d'acides et/ou des stabilisants de mise en oeuvre sont incorporés dans la matière plastique.

9. Utilisation selon l'une quelconque des revendications 1 à 8, **caractérisée en ce que** la matière plastique est mise sous la forme de pellicules, de plaques, d'articles extrudés, de fibres, de non-tissés, de bandelettes, de tissus.
